# EUROPEAN PATENT APPLICATION

(11) **EP 4 443 374 A1**
(43) Date of publication of application: **09.10.2024**
(21) Application number: 23743166.3
(22) Date of filing: 12.01.2023
(51) Int. Cl.: G06Q 40/04

(54) **INFORMATION PROCESSING DEVICE, METHOD FOR CONTROLLING INFORMATION PROCESSING DEVICE, AND PROGRAM**

(30) Priority: 18.01.2022 JP 2022005561
(71) Applicant: Kotaeru Holdings Inc., Tokyo 100-6390 (JP)
(72) Inventor: MATSUDA Yoshinari, Tokyo 100-6326 (JP)
(74) Representative: Murgitroyd & Company
(86) International application number: PCT/JP2023/000596
(87) International publication number: WO 2023/140171

(57) **Abstract**

Provided is a means capable of giving a reward corresponding to the degree of contribution to a company to an employee or the like. An information processing device includes: a first storage means that stores first trust information that is information related to a fact that a stock option is entrusted from a trustor to a first trustee; an inquiry means that inquires whether to designate a beneficiary for all or some of the stock options before a certain period of time prior to occurrence of a beneficiary designation event of a trust indicated by the first trust information; a response reception means that receives a response to an inquiry by the inquiry means; a second storage means that stores second trust information that is information related to a fact that, in a case where the response received by the response reception means does not designate all the beneficiaries, the stock option for which no beneficiary is designated among the stock options related to the first trust information is entrusted from the trustor to the second trustee; a generation means that generates a point granting reference table and a correction factor table indicating a reference for granting a point to a potential beneficiary; a potential beneficiary registration means that registers the potential beneficiary; a point management means that manages points of the potential beneficiaries on the basis of the point granting reference table and the correction factor table; and a determination means that determines the number of stock options to be granted to the potential beneficiary according to the point of the potential beneficiary managed by the point management means in a case where the response received by the response reception means designates a beneficiary.

## Description

### Technical Field

The present invention relates to an information processing device, a control method of the information processing device, and a program.

### Background Art

Conventionally, stock options that grant rights to purchase the company's stock at the exercise price to officers, employees, or related persons (hereinafter referred to as "employees or the like") of a company are known. Since the profit of a stock option increases as the stock price of the company's stock rises beyond the exercise price, the employee or the like who is given a stock option makes an effort to increase the company value toward the rise in the stock price.

Patent Literature 1 discloses that a securities company lends money to an employee or the like as a measure against the inability of the employee or the like to exercise a right to acquire a stock option because the employee or the like who has been granted the stock option cannot prepare a fund at the exercise price. As a result, by obtaining a loan, it is possible to promote the exercise of rights of the employee or the like who cannot exercise rights due to a shortage of funds.

### Citation List

### Patent Literature

Patent Literature 1: JP 2005-56095 A

### Summary of Invention

### Technical Problem

Conventionally, who is to be granted a stock option has been determined at the time of issuing the stock option. In addition, since the exercise price of a stock option is determined according to the stock price at the time of giving the stock option to the employee or the like, the value of a stock option is different between the employee or the like given when the stock price is low and the employee or the like given after the stock price rises. However, in some cases, an employee or the like who is given a stock option after the stock price has risen may have a higher level of contribution to the company. In such cases, there was room for improvement in the use of stock options because the actual degree of contribution or the like to the company was not reflected.

The present invention has been made to solve the above problems, and an object of the present invention is to provide a means capable of giving, to an employee or the like, a number of stock options corresponding to the degree of contribution or the like to the company in a stepwise manner by utilizing a trust and having the trustee temporarily manage the stock options.

### Solution to Problem

The present invention is an information processing device including: a first storage means that stores first trust information that is information related to a fact that a stock option is entrusted from a trustor to a first trustee; an inquiry means that inquires whether to designate a beneficiary for all or some of the stock options before a certain period of time prior to occurrence of a beneficiary designation event of a trust indicated by the first trust information; a response reception means that receives a response to an inquiry by the inquiry means; a second storage means that stores second trust information that is information related to a fact that, in a case where the response received by the response reception means does not designate all the beneficiaries, the stock option for which no beneficiary is designated among the stock options related to the first trust information is entrusted from the trustor to the second trustee; a generation means that generates a point granting reference table and a correction factor table indicating a reference for granting a point to a potential beneficiary; a potential beneficiary registration means that registers the potential beneficiary; a point management means that manages points of the potential beneficiaries on the basis of the point granting reference table and the correction factor table; and a determination means that determines the number of stock options to be granted to the potential beneficiary according to the point of the potential beneficiary managed by the point management means in a case where the response received by the response reception means designates a beneficiary.

### Advantageous Effects of Invention

According to the present invention, it is possible to provide a means capable of giving a reward or an incentive corresponding to the degree of contribution to a company to an employee or the like.

### Brief Description of Drawings

Fig. 1 is a block diagram illustrating an outline of an operation of a stock option management system according to Example 1 of the present invention.
Fig. 2 is a block diagram illustrating a schematic configuration of a stock option management system 50 according to Example 1 of the present invention.
Fig. 3 is a block diagram illustrating a configuration of each information processing device illustrated in Fig. 2.
Fig. 4 is a diagram illustrating an example of trust information stored in a storage unit 103 of an information processing device 16a illustrated in Fig. 2.
Fig. 5 is a flowchart illustrating processing by the stock option management system 50.
Fig. 6 is a flowchart illustrating processing of an example of designating a provisional person to be granted.
Fig. 7 is a flowchart illustrating processing by a stock option management system 50 according to Example 2.
Fig. 8 is a diagram illustrating an example of a point granting reference table for determining points according to a position and evaluation of an employee or the like by using a personnel evaluation in an evaluation period as the index for measuring the degree of contribution or the like of the employee or the like.
Fig. 9 is a diagram illustrating an example of a point granting reference table for determining points according to an incentive at the time of employment of an employee or the like.
Fig. 10 is a diagram illustrating an example of a point granting reference table for determining points according to the qualitative evaluation of an employee or the like.
Fig. 11 is a diagram illustrating an example of a correction factor table for performing correction according to a working period of an employee or the like.
Fig. 12 is a diagram illustrating an example of a correction factor table for performing correction according to a position of an employee or the like.
Fig. 13 is a diagram illustrating an example of a correction factor table for performing correction according to evaluation of an employee or the like.

### Description of Embodiments

Hereinafter, embodiments of an information processing device, a control method of the information processing device, and a program according to the present invention will be described with reference to the drawings.

### Example 1

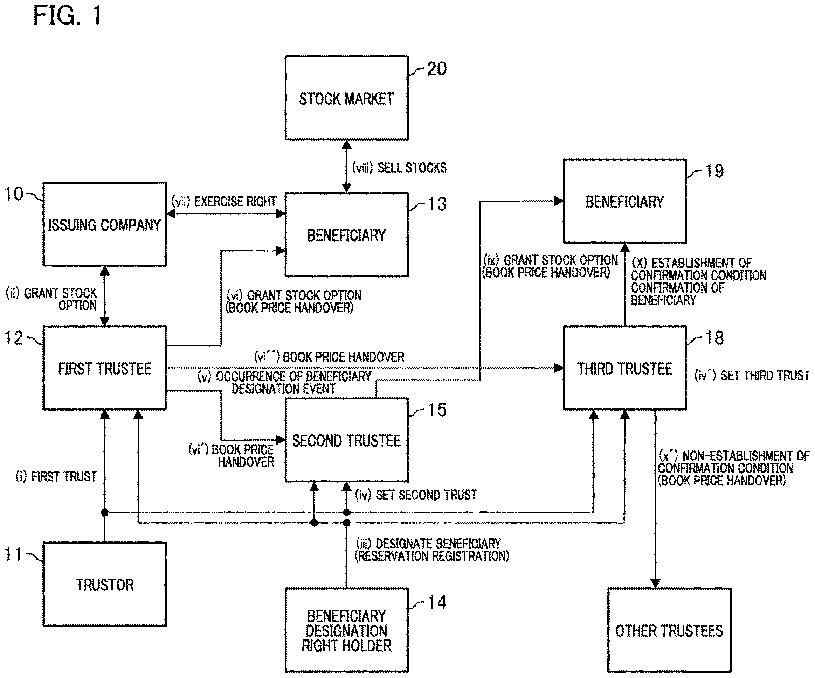

Fig. 1 is a block diagram illustrating an outline of an operation of a stock option management system according to Example 1 of the present invention. First, with reference to Fig. 1, a scheme relating to management of stock options in the present example will be described.

Note that in the present example, management of stock options will be described, but the present invention can also be applied to other rights. For example, the present invention can also be applied to a call option management system that manages a call option that is a right to acquire a stock at an exercise price. A stock option is a right to acquire a stock from an issuing company at the current exercise price, but a call option is a right to acquire a stock from a shareholder at the exercise price rather than from an issuing company, and the parties to which the rights can be claimed are different. In the case of a call option, there is a scheme in which a major shareholder (normally an owner manager) entrusts a call option in order to deliver his/her stock to a person who contributes in the future (call options may be entrusted, or money may be entrusted and paid to the shareholder to allow the trustee to acquire the call options set by the shareholder). The present invention can also be applied to a cryptographic asset management system that manages a cryptographic asset. Because cryptographic assets are issued by issuers and generally become more valuable when they have higher liquidity, there is a need to distribute them to influencers and collaborators (including officials, employees, and the like of the issuing corporation.) and to enable more transactions to be made at the cryptographic asset exchange. In the case of the cryptographic asset, there is a scheme in which an issuer or a person having a large number of cryptographic assets entrusts his/her cryptographic asset to deliver to a person who contributes in the future (cryptographic assets may be entrusted, or money or other assets may be entrusted to cause the trustee to acquire the cryptographic asset from the trustor or another third party). Furthermore, the present invention can be applied to a joint company or a union that is the basis of an investment fund, and a fund share management system that manages the share of a trust. The fund shares are normally held by an unlimited liability partner, a limited liability partner, or the like who has formed an investment fund. There is a need to increase the commitment of employees or professional managers who will be sent to the investee in the future to increase the corporate value of the investee by allowing all or part of the shares to be delivered to the employees or professional managers, for example. In the case of fund shares, there is a scheme in which a person who holds the fund shares entrusts his/her fund shares in order to deliver the fund shares to a person who contributes in the future (fund shares may be entrusted, or money or other assets may be entrusted to cause the trustee to acquire the fund shares).

An issuing company 10 is a company that issues a stock option targeted by the stock option management system of the present example. A trustor 11 is, for example, a manager or a shareholder of the issuing company 10. Note that the issuing company 10 may make a contribution. In a conventional stock option, the exercise price, the person to be granted, and the number to be granted to the person to be granted have been determined at the time of issuance, but in the present example, a trust type stock option (market value issue stock option trust (registered trademark)) is targeted. In the case of a trust type stock option, the exercise price (or the formula thereof) is determined at the time of issuance, and while a fixed number of stock options are temporarily granted to the trustee of the trust, an official, an employee, or the like is not specifically determined as a person to be granted, or the number to be granted to the person to be granted is not determined. A person (issuing company 10, trustor 11, or other persons) who is determined to be the beneficiary designation right holder by the trustor 11 may then determine the person to be granted and the number to be granted to the person to be granted according to the degree of contribution or the like to the company.

The trustor 11 trusts money to a first trustee 12 (first trust). In the present example, the trustor 11 trusts money to the first trustee 12. Since the transfer of property by the trust is involved at the time of setting up the trust, tax is imposed at a predetermined tax rate if required by law. Note that the trustor 11 may entrust stock options and cash to the first trustee 12 and pay the taxes in cash.

Subsequently, the first trustee 12 pays the entrusted money to the issuing company 10 as the price of the stock option. The issuing company 10 grants the stock option at the acquisition price calculated according to the current stock price to the first trustee 12 by the amount corresponding to the paid price.

Thereafter, the first trustee 12 continues management of the entrusted stock option until the occurrence of a beneficiary designation event of the trust. Examples of a beneficiary designation event of the trust include listing of the issuing company 10 that was unlisted at the time of setting up the trust, or passage of a predetermined period. Note that the first trustee 12 may exercise the right of the stock option by using the cash contributed by the trustor 11 to convert the stock option into stock. In addition, instead of a stock option or a call option, a stock may be entrusted or money may be entrusted, and the trustee 12 may acquire the stock. Furthermore, the cryptographic asset may be entrusted, or money or other assets may be entrusted to cause the trustee 12 to acquire the cryptographic asset.

In the present example, prior to the occurrence of a beneficiary designation event in the first trust, in a case where a response to designate a specific person to be granted as a beneficiary has not been obtained for all the stock options except for those waived, and the trustor 11 or a different trustor has an intention to further designate a specific person to be granted as a beneficiary afterwards, the trustor 11 or the different trustor creates a new trust by contribution of money or the like (second trust). Alternatively, in a case where a response to conditionally designate a specific person to be granted is obtained prior to the occurrence of a beneficiary designation event in the first trust, the trustor 11 or a different trustor creates a new trust by contribution of money or the like (third trust). The trustor of the first trust may be different from the trustor of the second trust or the third trust. The trustee (first trustee) 12 of the first trust, a trustee (second trustee) 15 of the second trust, and a trustee (third trustee) 18 of the third trust may be different. In addition, each of the second trust and the third trust may be a single trust or a plurality of trusts. In anticipation of the intention to further designate a specific person to be granted as a beneficiary afterwards, the second trust or the third trust may be configured in advance before confirming the intention. Then, in a case where the beneficiary designation event occurs in the first trust, the person (beneficiary designation right holder 14) determined as the beneficiary designation right holder by the trustor 11 can designate the second trustee 15 and/or the third trustee 18 as the beneficiary of the first trust and hand over the stock option to the second trustee 15 and/or the third trustee 18. As described above, by handing over the stock option to the second trustee 15 at the time when the beneficiary designation event of the first trust occurs, it is possible to keep a specific person to be granted (beneficiary) undetermined until the beneficiary designation event occurs in the second trust even after the occurrence of the beneficiary designation event in the first trust. As a result, it is possible to grant, to an employee or the like who contributes to the company after designating the beneficiary in the first trust, a stock option at the same exercise price as that at the time of setting up the first trust, and it is possible to grant the employee or the like a number of stock options corresponding to the degree of contribution or the like to the company. In addition, as described above, by handing over the stock option to the third trustee 18 at the time when the beneficiary designation event of the first trust occurs, even after the occurrence of the beneficiary designation event in the first trust, the specific person to be granted (beneficiary) can be determined and the stock option can be granted to the person to be granted after confirming whether or not the conditions are satisfied. Note that if required by law, the trust property at the time when the beneficiary designation event occurs in the first trust may be taken over as the trust property of the second trust or the third trust for a designated quantity (book price handover) according to the book price at that time.
(1) When a beneficiary designation event occurs in the first trust, the beneficiary designation right holder 14 may waive all of the stock options entrusted to the first trustee 12. In addition, a specific person to be granted and the number to be granted to the person to be granted may be determined, and the stock options may be granted to the determined person to be granted. A beneficiary 13 is a person to be granted and is a person to whom the a stock options are granted.
(2) Alternatively, when a beneficiary designation event occurs in the first trust, the beneficiary designation right holder 14 may determine a specific person to be granted and the number to be granted to the person to be granted for a predetermined number of the stock options entrusted to the first trustee 12, and grant the stock options to the determined person to be granted. The beneficiary designation right holder 14 may designate the second trustee 15 as the beneficiary for the remaining stock options that are not granted to the specific person to be granted among the stock options entrusted to the first trustee 12.
(3) Alternatively, when a beneficiary designation event occurs in the first trust, the beneficiary designation right holder 14 may designate the second trustee 15 as the beneficiary for all the stock option entrusted to the first trustee 12.
(4) Alternatively, when a beneficiary designation event occurs in the first trust, instead of designating the beneficiary by the methods of (1) to (3) for all of the stock options entrusted to the first trustee 12, the beneficiary designation right holder 14 may provisionally determine a specific person to be granted and then designate a trustee (third trustee 18) in a trust set for the person to be granted as the beneficiary. In this case, a condition under which the person to be granted is confirmed as a beneficiary 19 in the trust (third trust) set for the person to be granted may be set in advance, and in a case where the condition is satisfied, the provisionally determined person to be granted may become a confirmed beneficiary 19 without waiting for the occurrence of the beneficiary designation event, and the stock options may be granted. Moreover, in a case where this condition is not satisfied, the stock options may be granted to another beneficiary including a trustee in another trust existing at that time. In a case where the confirmation condition is not satisfied, the beneficiary designation right holder 14 in the third trust may designate a beneficiary again. In a case where the confirmation condition is not satisfied, the stock options entrusted to the third trustee may be returned to the trustor 11 or the issuing company 10.

Although illustration is omitted in Fig. 1, in the case where the beneficiary 19 is confirmed as the beneficiary upon satisfaction of the condition in the third trust, too, he/she can exercise his/her rights of the stock option against the issuing company 10 to acquire stocks and sell the stocks in a stock market 20 as in the case of the beneficiary 13. The first trustee, the second trustee, and the third trustee may exercise the rights of the stock option during the period in which they manage the stock options, and give the stocks to the beneficiary 13 and the beneficiary 19.

Even in a case where the beneficiary designation event occurs in the second trust, or even in a case where the condition is not satisfied in the third trust or a case where the beneficiary designation event occurs in the third trust, the beneficiary designation right holder 14 may designate the next trustee or the same trustee as the beneficiary, similarly to the case where the beneficiary designation event occurs in the first trust. If required by law, the first trustee 12 may have to be different from the second trustee 15 or the third trustee 18. Further, if required by law, the first trustee 12, the second trustee 15, and the third trustee 18 may be the same person as long as the person has a predetermined qualification. The first trustee 12, the second trustee 15, and the third trustee may be a natural person or a legal person. In addition, the beneficiary designation right holder in the first trust, the beneficiary designation right holder in the second trust, and the beneficiary designation right holder in the third trust may be different persons or may be the same person. The beneficiary designation right holder in the first trust, the beneficiary designation right holder in the second trust, and the beneficiary designation right holder in the third trust may be a natural person or a legal person.

There is a case where a trustee (including first trustee 12, second trustee 15, and third trustee 18) who holds a stock option and a beneficiary (including beneficiary 13 and beneficiary 19) acquire a stock of the issuing company 10 by exercising the right of the stock option, that is, by paying the exercise price to the issuing company 10. Note that the first trustee 12 may exercise the right of a stock option to acquire a stock, and deliver the acquired stock to the beneficiary 13 (including second trustee 15 and third trustee 18). In addition, the trustee (including first trustee 12, second trustee 15, and third trustee 18) and the beneficiary (including beneficiary 13 and beneficiary 19) who hold the stock option can sell the acquired stock in the stock market 20. In this case, the trustee (including first trustee 12, second trustee 15, and third trustee 18) who sold the stock may deliver the money acquired by the sale to the beneficiary (including beneficiary 13 and beneficiary 19).

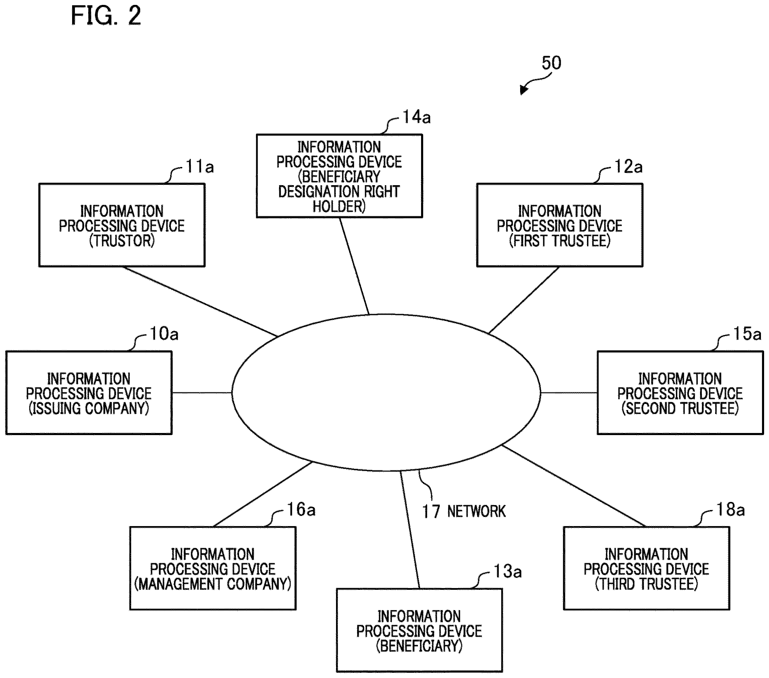

Fig. 2 is a block diagram illustrating a schematic configuration of a stock option management system 50 according to Example 1 of the present invention. The stock option management system 50 of the present example is configured by connecting information processing devices 10a, 11a, 12a, 13a, 14a, 15a, 16a, and 18a to each other via a network 17. The stock option management system 50 manages the trust of the stock options. The stock option management system 50 implements the scheme described with reference to Fig. 1.

An information processing device 10a is an information processing device operated by a person in charge at the issuing company 10. An information processing device 11a is an information processing device operated by the trustor 11. An information processing device 12a is an information processing device operated by the first trustee 12. An information processing device 13a is an information processing device operated by the beneficiary 13. An information processing device 14a is an information processing device operated by the beneficiary designation right holder 14. The beneficiary designation right holder may be a different person for each trust, such as the first trust, the second trust, and the third trust, or may be the same person. Here, these beneficiary designation right holders are represented by the beneficiary designation right holder 14. An information processing device 15a is an information processing device operated by the second trustee 15. An information processing device 16a is an information processing device operated by a person in charge at a management company that manages the stock option management system 50. An information processing device 18a is an information processing device operated by the third trustee 18. The Internet is used as the network 17, for example, and any known network can be used regardless of whether it is wired or wireless. The stock option management system 50 may be configured not to include at least one of the information processing devices 10a, 11a, 12a, 13a, 14a, 15a, 16a, and 18a. The stock option management system 50 may include an information processing device other than the information processing devices 10a, 11a, 12a, 13a, 14a, 15a, 16a, and 18a.

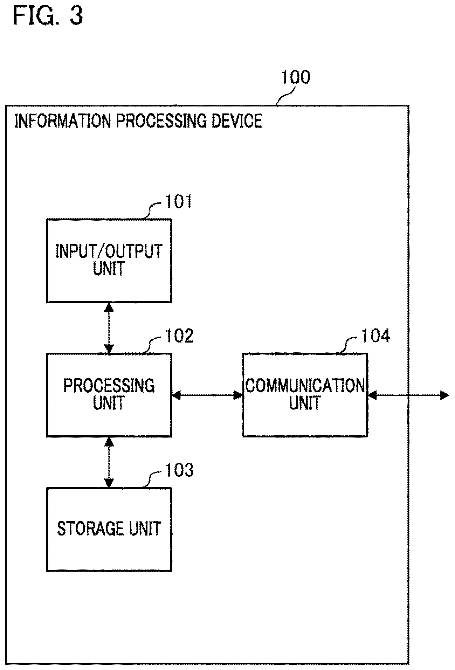

Fig. 3 is a block diagram illustrating a configuration of each information processing device illustrated in Fig. 2. In Fig. 3, the configuration of the information processing devices 10a, 11a, 12a, 13a, 14a, 15a, 16a, and 18a illustrated in Fig. 2 is illustrated as the configuration of an information processing device 100. The information processing device 100 is at least one of the information processing devices 10a, 11a, 12a, 13a, 14a, 15a, 16a, and 18a. Each of the information processing devices 10a, 11a, 12a, 13a, 14a, 15a, 16a, and 18a may have the same configuration, or each of the information processing devices may have a configuration different from the other information processing devices.

The information processing device 100 includes a processing unit 102 that performs various types of processing, an input/output unit 101 that performs input/output from and to an operator, a storage unit 103 that stores various types of data, and a communication unit 104 that performs communication via the network 17. The information processing device 100 is a computer. The information processing device 100 may be any computer. The information processing device 100 may be a device generally referred to as a personal computer or a device referred to as a supercomputer. Furthermore, the information processing device 100 may be a device referred to as a smartphone or a tablet. The processing unit 102 is an arithmetic device referred to as a CPU or an MPU. The processing unit 102 executes a program stored in the storage unit 103. The processing unit 102 stores various types of data related to information processing in the storage unit 103. The information processing device 100 registering information corresponds to the processing unit 102 storing the information in the storage unit 103. The storage unit 103 may be any known storage device such as a RAM, a ROM, a magnetic storage device, or an optical storage device. The input/output unit 101 is an input/output device such as a keyboard, a mouse, and a display. The processing unit 102 executes information processing in accordance with information input from the operator via the input/output unit 101. Furthermore, the processing unit 102 executes information processing in accordance with information input via the communication unit 104.

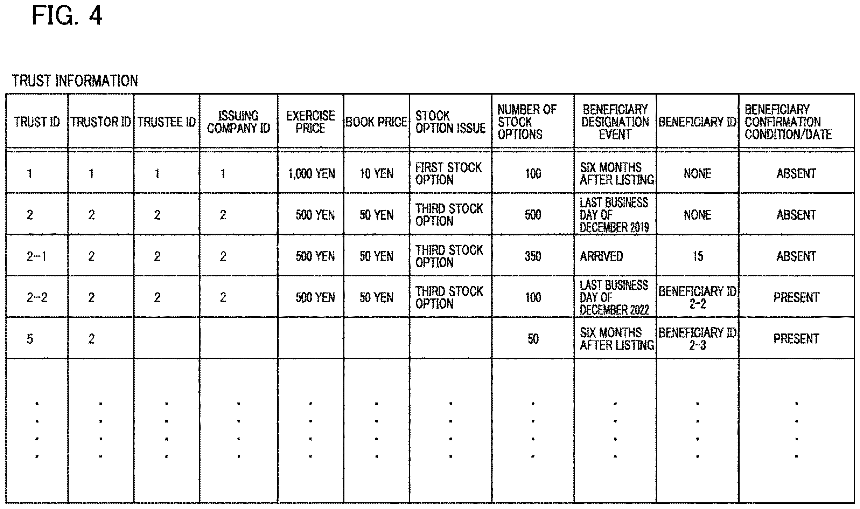

Fig. 4 is a diagram illustrating an example of trust information stored in the storage unit 103 of the information processing device 16a illustrated in Fig. 2. In the present example, the trust information is stored in the information processing device 16a operated by a person in charge at a management company that manages the stock option management system 50. The trust information may be stored in another information processing device.

In the stock option management system 50, it is also possible to manage trust of a stock option in a state where the beneficiary has been determined. A trust ID included in trust information is an ID capable of identifying each trust, and is uniquely allocated to each trust. A trustor ID included in trust information is an ID capable of identifying the trustor of the trust. A trustee ID included in trust information is an ID capable of identifying the trustee of the trust. An issuing company ID included in trust information is an ID capable of identifying an issuing company that issues the stock option of the trust. An exercise price included in trust information is the exercise price of the stock option of the trust. A beneficiary designation event included in trust information is an event or a due date for designating a beneficiary of the trust. A book price included in trust information is, for example, the paid-in value of the stock option paid when the trustee of the trust receives the grant of the stock option, or the market value of the stock option when the trustee of the trust receives the trust of the stock option. A stock option issue included in trust information is the issue number of stock options that are the trust property of the trust. The number of stock options included in trust information is the number of stock options that are the trust property of the trust. Beneficiary information included in trust information is information on the beneficiary of the stock option of the trust. A beneficiary ID included in beneficiary information is an ID capable of identifying the beneficiary. The number of stock options included in beneficiary information is the number of stock options granted to the beneficiary. In addition, the number of stock options is the number of stock options entrusted with the trust ID in a case where the beneficiary is not confirmed.

The record with the trust ID "1" in Fig. 4 is a record of a trust (hereinafter referred to as "collective delivery trust") that simultaneously and collectively designates the beneficiary for all of the stock options entrusted when the beneficiary designation event occurs. Normally, a beneficiary does not exist for an entrusted stock option until a beneficiary designation event occurs. In this case, the trust is a beneficiary unidentified type.

The record with the trust ID "2" in Fig. 4 is a record of a trust (hereinafter referred to as "multi-type trust") in which the stock option is repeatedly entrusted and re-entrusted after occurrence of a beneficiary designation event. The content of the multi-type trust is not different from that of the collective delivery trust at the beginning except for the characteristic that the beneficiary designation events are linked at a certain date. In this case, the trust is a beneficiary unidentified type.

The record with the trust ID "2-1" in Fig. 4 is a record of a multi-type trust, and is a record for a confirmed beneficiary after occurrence of a beneficiary designation event. This record indicates a pattern in which a beneficiary designation event has arrived in a multi-type trust, and indicates a pattern in which the beneficiary is determined and the trust has not ended.

The record with the trust ID "2-2" in Fig. 4 is a record of a multi-type trust, and is a record for the second trust that has taken over the stock option from the trust in which the beneficiary designation event has occurred. In this record, the issuing company ID, the exercise price, the book price, and the issue number of the stock option are taken over from the first trust. As the number of stock options, the number of stock options that have been taken over is registered.

In trust information, in a case where the grantor is provisionally determined without confirming the beneficiary, the grantor is registered as a provisional person in the section of the beneficiary. By registering the trustee as the beneficiary and transferring the trustee to a third trust and setting the trustee as the person to be granted, the conditions and the time limit of the confirmation of the beneficiary are registered.

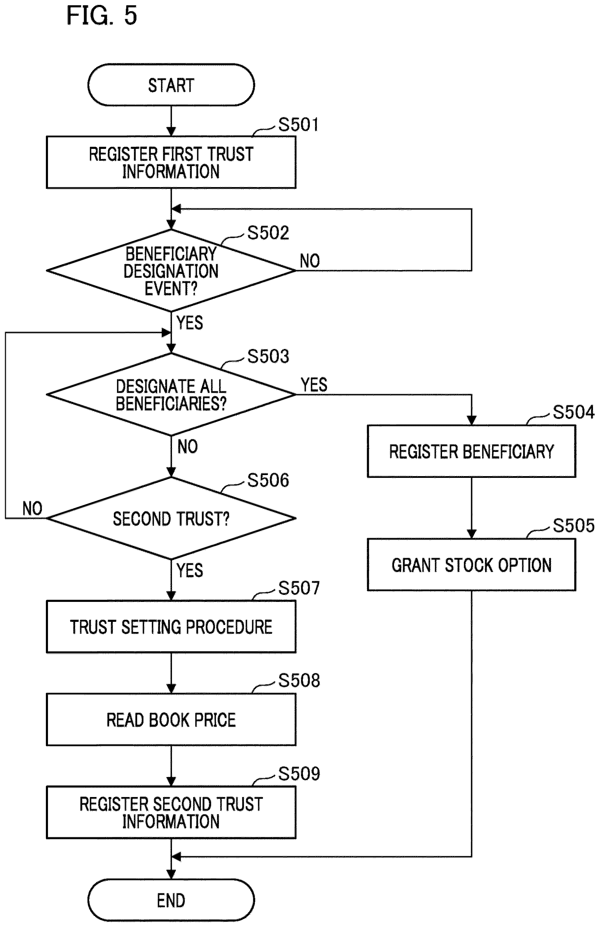

Hereinafter, the operation of the stock option management system 50 of the present example will be described. Fig. 5 is a flowchart illustrating processing by the stock option management system 50. The processing by the stock option management system 50 may be distributed and executed by the information processing devices 10a, 11a, 12a, 13a, 14a, 15a, and 16a illustrated in Fig. 2. Furthermore, for example, information processing devices other than the information processing device 16a may be used as information input/output terminal devices, and the information processing device 16a may perform information processing and information storage. In the present example, the information processing device 16a performs information processing and information storage, and provides another information processing device with an information input/output user interface via the network 17.

The information processing device 16a issues each ID included in the trust information in advance and registers each ID. In step S501 of Fig. 5, the information processing device 16a registers each piece of information of the trust information of Fig. 4 as first trust information according to the occurrence of the trust. At this time, for example, "none" is set for the beneficiary information in the trust information in a case where it is undetermined. Thereafter, the information processing device 16a performs registration at the time when the beneficiary information is determined. While the trust continues, the information processing device 16a may calculate a commission or a cost of the trust and execute processing of making a request to the trustor 11 or the issuing company 10.

In step S502, the information processing device 16a determines the beneficiary designation event for the trust. Examples of a beneficiary designation event include listing of the issuing company 10 that was unlisted at the time of setting up the trust, or passage of a predetermined period. In step S502, the information processing device 16a determines whether or not it is a certain period of time before the occurrence of the beneficiary designation event of the trust. Whether it is a certain period of time before the occurrence of the beneficiary designation event may be input to the stock option management system 50 by the trustor 11, a person in charge at the issuing company 10, or a person in charge at a management company 16, or the information processing device 16a may automatically determine the passage of the trust period, for example. In a case where it is not a certain period before the occurrence of the beneficiary designation event, the information processing device 16a continues the trust as it is. In a case where it is a certain period before the occurrence of the beneficiary designation event, the information processing device 16a proceeds to step S503.

In step S503, the information processing device 16a inquires whether to designate all or some of the beneficiaries for the trust. In other words, this processing corresponds to inquiring whether to continue the trust of the stock option according to the trust information of the first trust.

For the inquiry in step S503, for example, an inquiry is made to the trustor 11 (e.g., information processing device 11a operated by trustor 11). In a case where the person (beneficiary designation right holder 14) defined as the beneficiary designation right holder by the trustor 11 is a person other than the trustor 11, an inquiry is made to that person. For example, when the beneficiary designation right holder 14 is the issuing company 10, an inquiry is made to the issuing company 10 (e.g., information processing device 10a operated by person in charge at issuing company 10). In this case, the issuing company 10 determines the degree of contribution or the like to the company itself or its subsidiary company/associated company (hereinafter referred to as "own company group"), and designates the beneficiary to deliver the stock option to the employees or the like. Note that the employees and the like include not only officials and employees of the company but also officials and employees of the company group and external collaborators such as advisers and contract companies. The beneficiary designation right holder who has received the inquiry in step S503 responds as to whether or not to designate the beneficiary for all or some of the stock options. In a case where the beneficiary designation right holder designates all the beneficiaries, the designated beneficiary is input to the information processing device 11a or an information processing device operated by the beneficiary designation right holder, and the information processing device 16a that has received the input is registered as a reservation in the beneficiary information included in the trust information of the trust (step S504). Note that in a corporate taxable trust, beneficiaries must be designated collectively at the same time. Therefore, reservation registration or the setting of the second trust is completed before the beneficiary designation event occurs, and the beneficiaries including the second trustee are simultaneously and collectively confirmed at the time when the beneficiary designation event occurs. In a case where the beneficiary designation right holder 14 that has received the inquiry in step S503 does not register the reservation of the beneficiary by inputting all the stock options to the information processing device 11a or the information processing device 14a, the information processing device 16a that has identified such a fact may give a notification to the trustor 11 or the beneficiary designation right holder 14 to set the second trust by the trustor 11 or a different trustor until a beneficiary designation event occurs, and may cause the trustee in the second trust to be designated as the beneficiary (NO in step S503, YES in S506, S507, S508, S509). In this case, the beneficiary designation right holder 14 inputs the trustee of the second trust as the beneficiary to the information processing device 11a or the information processing device 14a, and the information processing device 16a that has received the input information registers the input information as a reservation in the beneficiary information included in the trust information of the trust (step S504). For the stock options pertaining to the trust, it is possible to designate all the beneficiaries, not designate any of the beneficiaries, or designate some of the beneficiaries and not designate the remaining beneficiaries. In addition, until occurrence of a beneficiary designation event, the beneficiary designation right holder may change the beneficiary information registered as a reservation in the information processing device 16a or may add a beneficiary by the information processing device 11a or the information processing device 14a. Note that in step S503, those of the entrusted stock options to be waived may be excluded from the "all" target and processing may be performed.

In step S503, the information processing device 16a first executes processing of requesting the beneficiary designation right holder 14 to designate the beneficiary. This request processing is processing of transmitting a request by e-mail, for example. In step S503, the information processing device 16a determines whether the beneficiary designation right holder 14 designates all the beneficiaries in response to the request.

In a case where the beneficiary designation right holder 14 designates all the beneficiaries, the information processing device 16a proceeds to step S504. In a case where the beneficiary designation right holder 14 does not designate all the beneficiaries, the information processing device 16a proceeds to step S506.

In step S506, the information processing device 16a inquires whether to hand over the stock options to the second trust. In a case where the beneficiary designation right holder responds to the inquiry that the stock options are handed over to the second trust, the processing proceeds to step S507. In response to this inquiry, in a case where the beneficiary designation right holder responds that the stock options are not handed over to the second trust, the processing returns to step S503, and until the beneficiary designation event occurs, the processing waits for the designation of all beneficiaries (YES in S503) or the handover to the second trust (YES in S506). Even if the beneficiary designation event occurs, in a case where the designation of all beneficiaries or the handover to the second trust is not performed, those of the entrusted stock options for which no beneficiary is designated are waived.

In step S507, the information processing device 16a advances the procedure of setting the second trust by separately entrusting money or the like. For example, in the information processing device 11a or the information processing device 14a, when the trustor 11 or the beneficiary designation right holder 14 presses a confirmation button, the information processing device 16a that recognizes the pressing executes processing of advancing the process necessary for the conclusion of the contract of the second trust. For example, processing of entering into a trust contract with an electronic signature and processing of outputting a notification for prompting contribution of money to the trustee are executed.

The information processing device 16a notifies the trustee that the beneficiary registered for reservation in the trust information is the final beneficiary at the time when the beneficiary designation event occurs, whereby the beneficiary is confirmed.

In a case where the response in step S503 is to designate the beneficiary, in step S505, the information processing device 16a grants the stock option to the designated beneficiary upon occurrence of the beneficiary designation event. In this processing, specifically, upon occurrence of the beneficiary designation event, the information processing device 16a notifies the trustee 12 to grant the stock option to the beneficiary 13 (beneficiary registered in step S504), thereby confirming the beneficiary who was registered for reservation as the beneficiary. Note that the beneficiary designation event includes a process such as a resolution by a committee when designating a beneficiary. Subsequently, for example, the information processing device 16a registers, in the trust information, that the trust for the stock option for which the current beneficiary is designated has ended. Note that even after the beneficiary is designated, the trust may be continued without granting the stock option.

Note that since the designation of the beneficiary is essentially performed only once, it is not possible designate the beneficiary of the second trust in a case where the beneficiary is not designated. However, if the designation is arranged as a reservation, it can be arranged as processing before arrival of the beneficiary designation event, and it is possible to simultaneously and collectively confirm the beneficiary when the beneficiary designation event occurs. In addition, in a case where the beneficiary designation event arrives without designating the beneficiary including the trustee of the second trust, a notification is immediately sent to the issuing company, and the stock option is waived.

In step S508 following step S507, the information processing device 16a reads the book price from the trust information of the trust. Subsequently, in step S509, the information processing device 16a registers each piece of information of the trust information of Fig. 4 as second trust information for the trust. A new trust ID is assigned to the trust information of the second trust. The information processing device 16a uses the book price read in step S508 as the book price of the trust information of the second trust. The trustee of the second trust may take over the stock option, which is the trust property, as a beneficiary from the first trust. In step S509, for example, the information processing device 16a registers, in the trust information, the fact that the handover to the second trust has been performed and the first trust has ended for the trust for those of the stock options for which the beneficiary has not been designated this time that have not been waived.

Note that in the designation of the beneficiary, after the person to be granted is provisionally determined, the trustee in a trust set for the person may be designated as the beneficiary. If the beneficiary is suddenly confirmed as a beneficiary, there is a case where the beneficiary does not contribute to the issuing company 10 sufficiently thereafter, and the trustor 11 is dissatisfied. Therefore, in the example described here, first, the person to be granted is provisionally determined, and then, for example, in a case where the person has made a sufficient contribution (in a case where confirmation condition is satisfied), the provisional person to be granted is confirmed as the beneficiary.

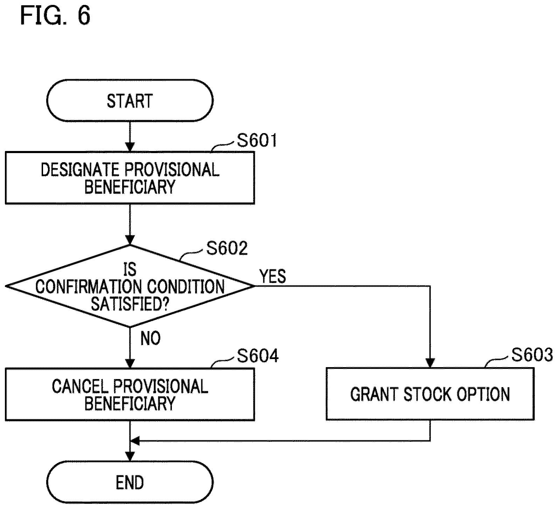

Hereinafter, processing of an example of designating a provisional person to be granted will be described with reference to Fig. 6.

Step S601 is processing executed, for example, in a case where a person to be granted is provisionally determined in S503 of Fig. 5, and then the trustee in a trust set for the person is designated as the beneficiary. In this case, the information processing device 16a registers a person provisionally determined as a person to be granted in the trust information of the trust and a trustee of the trust set for the person. In this case, a new trust ID is assigned to the trustee. The information processing device 16a uses the book price in the first trust read in step S506 as the book price of the new trust information. Such a trustee of the trust can take over the stock option, which is the trust property, from the first trust. In step S507, for example, the information processing device 16a registers, in the trust information, that the handover to the trustee of the new trust has been performed and the first trust has ended, for the part of the trust for which the person to be granted is provisionally determined this time. In a case where the trustee is designated as the beneficiary, the handover of the stock option to the provisionally determined person to be granted is not performed, and in step S602, the information processing device 16a determines whether or not the confirmation condition is satisfied. The confirmation condition is satisfied, for example, in a case where a person who is provisionally determined as a person to be granted makes a predetermined contribution to the issuing company 10. Whether or not the confirmation condition is satisfied may be input by the trustor 11 or the issuing company 10. In addition, the result of listening by the trustee or the beneficiary designation right holder 14 from the trustor 11, the issuing company 10, or the like may be input.

In a case where the confirmation condition is satisfied in step S602, the person who is provisionally determined as the person to be granted is confirmed as the beneficiary in the trust set for the person. In step S603, the information processing device 16a registers the provisionally determined person to be granted in the trust information of the trust as the confirmed beneficiary. In addition, the information processing device 16a grants the stock option to the confirmed beneficiary. That is, the information processing device 16a notifies the trustee (the person may be trustee 12 or another trustee) in the trust set for the person to be granted to grant the stock option to the beneficiary 13 (confirmed beneficiary).

In a case where the confirmation condition is not satisfied in step S602, the provisionally determined person to be granted is regarded as a person who is confirmed not to be the beneficiary, and another beneficiary (the person may be trustee in another trust or another person) set forth in a trust agreement in advance becomes the beneficiary. A case where the beneficiary designation right holder (the beneficiary designation right holder may be beneficiary designation right holder 14 or another beneficiary designation right holder) designates the beneficiary again may be adopted. In step S604, the information processing device 16a deletes the provisional person to be granted in the trust information of the trust and registers the new beneficiary as the beneficiary, and the information processing device 16a grants the stock option. That is, the information processing device 16a notifies the trustee 12 to grant the stock option to the beneficiary 13 (confirmed beneficiary).

Note that in the stock option management system 50, provisionally determining the person to be granted in the first trust can be referred to as designating the trustee in the trust set for the person to be granted as the beneficiary. In this case, when the confirmation condition is satisfied, the provisional person to be granted is confirmed as the beneficiary. When the confirmation condition is not satisfied, the stock option can be returned from the trust set for the provisionally determined person to be granted to the first trust (or another trust such as a trust with an unspecified beneficiary where the person to be granted is not provisionally determined like the second trust). That is, in this case, the stock option is handed over to another trustee as the trust property.

In the above-described example, it has been mainly disclosed that, in a case where not all the beneficiaries are designated, the second trust is formed, and information on the stock option for which the beneficiary was not designated and was not waived is poured into the second trust. Further, in the present invention, for example, the following processing can be executed by the information processing device 16a.
(1) Processing of prompting composition of a second trust when there is insufficient exercise of the right of designation of the beneficiary (transition to contract conclusion process).
(2) In a case where the composition of the second trust is completed (contract entering process is completed),
   · processing of executing reservation registration to designate a trustee of the second trust as a beneficiary of the first trust, and
   · Processing of automatically accepting a request for reservation registration to designate the trustee of the second trust as the beneficiary of the first trust in a case where the beneficiary of the first trust is not designated and waiver of the stock option is not desired, and processing of, at a time when the beneficiary designation event occurs, regarding the beneficiary designation event as a beneficiary designation notification and handing over information of a stock option to be handed over to the second trust among the stock options for which the beneficiary designation event has occurred.
(3) Processing of automatically transmitting a transfer approval request and a trust property status report necessary as requirements against a third party to a trustor or an issuing company according to the content of designation of a beneficiary.

Furthermore, in the present invention, for example, the following processing can be executed by the information processing device 16a. For example, regarding the provisional determination of the person to be granted, if "distribute with conditions" is selected (reservation registration) in the designation of the beneficiary,
(1) processing of automatically prompting creation of a third trust (trust for creation of dedicated trust account),
(2) after the creation of this trust, processing of regarding that a beneficiary designation notice is given from the issuing company to the trustee upon arrival of a beneficiary designation event, and
(3) processing of automatically sending a transfer approval request and a trust property status report necessary as requirements against a third party to a trustor or an issuing company according to the content of designation of a beneficiary.

Further, according to the stock option management system 50 of the above-described example, a beneficiary designation right holder can determine the following on an operating information processing device
(1) who will be the unconditional beneficiary,
(2) who will be the conditional beneficiary (= whether to create a third trust),
(3) whether to transfer to the second trust without designating all the beneficiaries; and
(4) whether to waive.

Further, for the third trust in (2), one trust needs to be created for each person, which causes a drastic increase in the number of composition of the trust, but the stock option management system 50 includes:
· a means that automatically hands over trust information of a first trust;
· a means that regards a reservation registration as a beneficiary designation notification upon expiration of a time limit and transfer rights, and
· a means that automatically creates a tax return or a trust property status report for each third trust composed for each person.

Therefore, according to the present invention, it is possible to smoothly achieve processing of a huge number of trusts that cannot be performed manually.

Note that the stock option management system according to the present invention has the following configuration.
(1) Means that transmits an email or the like prompting designation of a beneficiary to an information processing device operated by a trustor or a beneficiary designation right holder as a beneficiary designation event approaches;
(2) means that hands over information from trust information of a first trust to trust information of a second trust and a third trust (e.g., book price handover);
(3) in addition to a case of unconditionally designating all beneficiaries according to the beneficiary designation, means that makes an inquiry to an information processing device operated by the trustor or the beneficiary designation right holder so that the trustor or the beneficiary designation right holder can select any one of
   (i) (waiver),
   (ii) handover to a new trustee by composition of the second trust, and
   (iii) handover to a new trustee for a person to be conditionally granted by composition of the third trust, and means that receives a response thereto;
(4) means that transmits guidance on procedures necessary for the composition of the second trust and the third trust to an information processing device operated by the trustor or the beneficiary designation right holder at a timing of composing the second trust and the third trust;
(5) means that, when the composition of the second trust and the third trust is completed, finally enables designation of the trustees of the second and third trusts as the beneficiary; and
(6) means that generates, on the basis of trust information and the like, necessary documents such as a trust property status report and a tax return which are necessary as a result of composition of a new trust.

According to the present invention, it is possible to select handover to the second trust (without determining the person to be granted) and handover to the third trust (with a condition of provisional determination and confirmation of the person to be granted) in addition to designation of a specific beneficiary, and it is possible to increase the degree of freedom of selection of the trustor and the beneficiary designation right holder.

In addition, according to the present invention, the preparation for the next trust (guidance, document generation, and the like) is automated according to the situation of the beneficiary designation by the trustor and the beneficiary designation right holder. After the beneficiary designation (reservation registration) by the beneficiary designation right holder, when the beneficiary designation event occurs, the beneficiary is automatically designated, the property is handed over, and the necessary documents are prepared, which has effects of shortening the time and reducing the cost.

(1) Note that the present invention is characterized by including: a first storage means that stores first trust information that is information related to a fact that a stock option is entrusted from a trustor to a first trustee; an inquiry means that inquires whether to designate a beneficiary for all or some of the stock options before a certain period of time prior to occurrence of a beneficiary designation event of a trust indicated by the first trust information; a response reception means that receives a response to the inquiry by the inquiry means; and a second storage means that stores second trust information that is information related to a fact that, among the stock options related to the first trust information, the one for which a beneficiary has not been designated has been entrusted by the trustor to a second trustee, in a case where the response received by the response reception means does not designate all the beneficiaries. As a result, it is possible to continue as the second trust even after the first trust is ended, and it is possible to give the employee or the like the number of stock options according to the degree of contribution or the like to the company.

In addition, the present invention may include: a first storage means that stores first trust information that is information related to a fact that a stock option is entrusted from a trustor to a first trustee; an inquiry means that inquires whether to designate a beneficiary for all or some of the stock options (or whether to waive the stock options) a certain period prior to occurrence of a beneficiary designation event of a trust indicated by the first trust information; a response reception means that receives a response to the inquiry by the inquiry means; a first information processing means that, in a case where the response received by the response reception means is not to designate a beneficiary for all of the stock options except for those waived, is capable of setting in advance a second trust or a third trust in which the beneficiary designation event comes after the beneficiary designation event of the first trust; a second information processing means capable of designating, as a beneficiary, a trustee (second trustee) in a second trust or a trustee (third trustee) in a third trust set by the first information processing means for those of the stock options related to the first trust information for which a beneficiary has not been designated; and a second storage means or a third storage means that stores second trust information or third trust information that is information regarding handover of the stock option serving as the trust property of the first trust as the trust property in the second trust or the third trust in a case where the second trustee or the third trustee is designated as the beneficiary.

In addition, the present invention may include a means that, when a beneficiary is designated for all the stock options, changes the name of the stock option from the trustee's name to the beneficiary's name.

In addition, it is after the composition of the second trust or the third trust that the trustee of the second trust or the third trust is designated as the beneficiary of the first trust.

(2) Furthermore, the present invention is characterized by including a first reading means that reads a book price of the stock option related to the first trust information included in the first trust information stored in the first storage means, and the second storage means stores the book price of the stock option related to the second trust information included in the second trust information by directly taking over the book price read by the first reading means. As a result, the second trust can be set at the same book price as that of the first trust, can be continued as the second trust even after the first trust is ended, and a number of stock options corresponding to the degree of contribution or the like to the company can be granted to the employee and the like in a stepwise manner.

(3) In addition, the present invention is characterized by further including: a second reading means that reads beneficiary information that is included in the first trust information stored in the first storage means and is information on the beneficiary of the trust of the stock option; a third reading means that reads the beneficiary designation event included in the first trust information stored in the first storage means; a second inquiry means that inquires whether to grant the stock option to the beneficiary identified by a beneficiary ID included in the beneficiary information read by the second reading means in a certain period of time prior to the occurrence of the beneficiary designation event read by the third reading means; a second response reception means that receives a response to the inquiry by the second inquiry means; and a granting unit that grants a stock option to a beneficiary to whom the response received by the second response reception means grants a stock option, wherein the second storage unit stores the second trust information on the assumption that the trust is continued for the stock option other than the stock option granted by the granting unit among the stock options pertaining to the first trust information. As a result, the stock options pertaining to the first trust can be classified into those for which the trust is ended in the first trust and those for which the trust is continued in the second trust, and with flexibility, the stock options of a quantity corresponding to the degree of contribution or the like to the company can be given to the employee or the like.

(4) In addition, the present invention is characterized by further including: a second reading means that reads beneficiary information that is included in trust information of the first trust stored in the first storage means and is information on the beneficiary of the trust of the stock option; a third reading means that reads the beneficiary designation event included in the trust information of the first trust stored in the first storage means; a second inquiry means that inquires whether to grant the stock option to the beneficiary identified by a beneficiary ID included in the beneficiary information read by the second reading means in a certain period of time prior to the occurrence of the beneficiary designation event read by the third reading means; a second response reception means that receives a response to the inquiry by the second inquiry means; and a granting unit that grants a stock option to a beneficiary to whom the response received by the second response reception means grants a stock option, wherein the second storage unit provisionally determines a person to be granted with respect to a stock option other than the stock option granted by the granting unit among the stock options pertaining to the trust information of the first trust, and stores the stock option in combination with a condition for confirming the beneficiary, and in a case where the person to be granted is provisionally determined, the second storage unit stores trust information of the second trust so as to continue the trust by designating a trustee in the trust set for the person to be granted as the beneficiary. As a result, the stock options pertaining to the first trust can be classified into those for which the trust is ended in the first trust and those for which the trust is continued in the second trust. In addition, it is possible to provisionally determine the person to be granted and then determine whether or not to finally grant the stock options according to the degree of contribution or the like to the company of the person, and it is possible to give the number of stock options according to the degree of contribution or the like to the company to the employee or the like with further flexibility.

### Example 2

Next, the operation of a stock option management system according to Example 2 of the present invention will be described. Example 2 is the same as Example 1 except for the points described below. Description of the same points as in Example 1 will be omitted. In Example 1, the issuing company 10 determines the degree of contribution or the like in the company and designates the beneficiary so as to deliver the stock option to the employee or the like. However, in the present example, a specific example of the method of designating the beneficiary will be disclosed. In Example 2, a point system is adopted, and it is determined whether or not to deliver the stock option to the employee or the like and the number of shares to be delivered in the case of delivery, according to the number of points granted to the employee or the like.

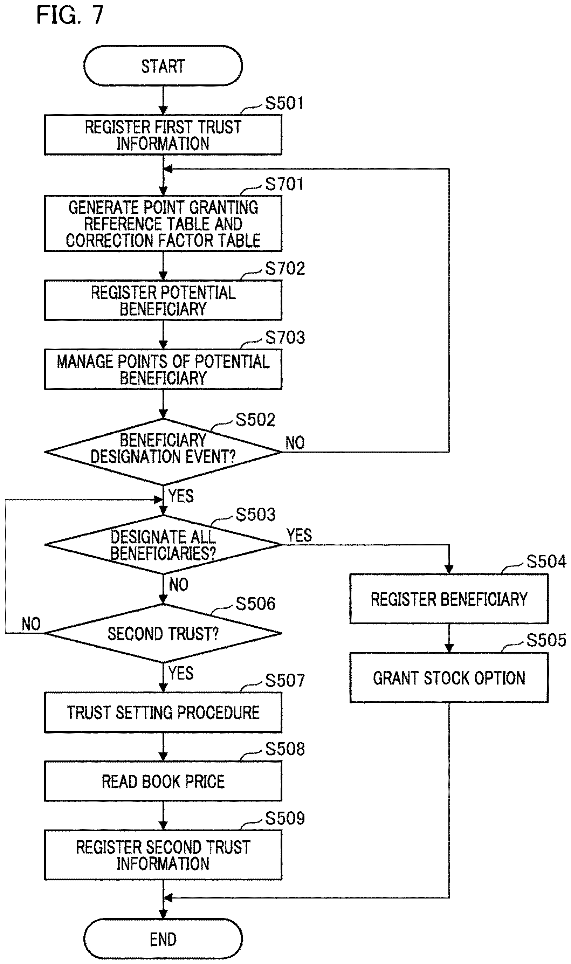

Hereinafter, the operation of a stock option management system 50 of Example 2 will be described. Fig. 7 is a flowchart illustrating processing by the stock option management system 50 according to Example 2. In Fig. 7, the same processing as that in Fig. 5 is denoted by the same reference numeral, and description thereof is omitted.

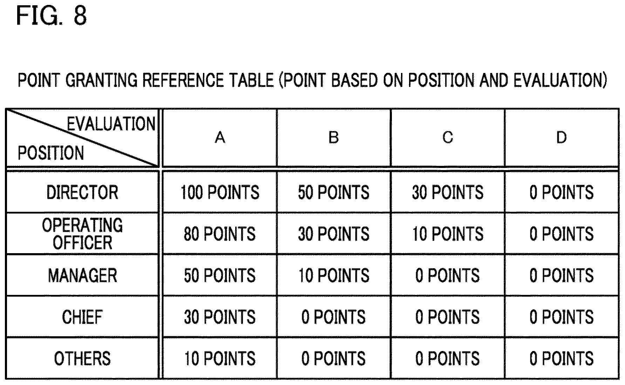

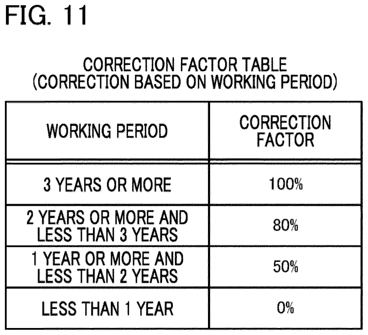

In step S701 following the processing of S501, an information processing device 16a generates a point granting reference table and a correction factor table for a first trust registered in step S501. The point granting reference table is a table serving as a reference of the number of points granted to an employee or the like. The correction factor table is a table serving as a reference of a correction factor to be multiplied by the point calculated in the point granting reference table. The operator may directly input the reference, the number of points, and the correction factor to the point granting reference table and the correction factor table, and the information processing device 16a which receives the input may generate the point granting reference table and the correction factor table according to the input. The point granting reference table and the correction factor table may be automatically generated by the information processing device 16a. In a case where the information processing device 16a automatically generates the point granting reference table and the correction factor table, the information processing device 16a presents predetermined question items related to an index and a correction factor for a beneficiary designation right holder to measure the degree of contribution, and receives an answer thereto or data input (request item) of the index and the correction factor for measuring the degree of contribution, thereby generating the point granting reference table and the correction factor table. Specifically, the information processing device 16a automatically generates the point granting reference table and the correction factor table in response to an input of an answer (request item) from the trustor or the issuing company. The request item includes, for example, what kind of index to select as the index and correction factor to measure the contribution or the like, and the weighting of the number of points in the selected index and the correction factor. Examples of the index and the correction factor for measuring the degree of contribution or the like include a personnel evaluation during an evaluation period of an employee or the like, a certain action indicating a contribution expectation degree of the employee or the like, a position to be employed at the time of employment, a working period, an award to the employee or the like during the evaluation period, a salary of the employee or the like, an event in an issuing company, a life event of the employee or the like, a degree of achievement of a business plan, a degree of achievement of a project, and the like. Figs. 8, 9, and 10 illustrate examples of the point granting reference table. Figs. 11, 12, and 13 illustrate examples of the correction factor table.

Fig. 8 is a diagram illustrating an example of a point granting reference table for determining points according to a position and evaluation of an employee or the like by using a personnel evaluation in an evaluation period as the index for measuring the degree of contribution or the like of the employee or the like. The evaluation is evaluation of work performance and the like. In the evaluation, A is the highest evaluation, B is the second highest evaluation, C is the third highest evaluation, and D is the lowest evaluation. According to the point granting reference table of Fig. 8, for example, when a certain employee or the like is a manager and the evaluation is B, 10 points are granted to the employee or the like.

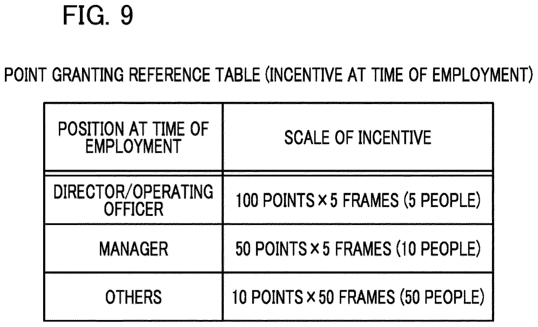

Fig. 9 is a diagram illustrating an example of a point granting reference table for determining points according to an incentive at the time of employment of an employee or the like. According to the point granting reference table illustrated in Fig. 9, for example, in a case where a position at the time of employment of a certain employee or the like is a manager, 50 points are granted to the employee or the like in a case where the position falls within a frame of up to 10 people.

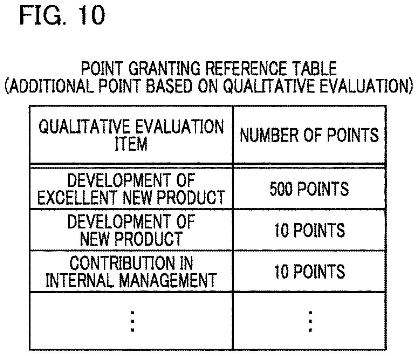

Fig. 10 is a diagram illustrating an example of a point granting reference table for determining points according to the qualitative evaluation of an employee or the like. According to the point granting reference table of Fig. 10, for example, in a case where a certain employee or the like is recognized to have developed an excellent new product, 500 points are granted to the employee or the like.

Fig. 11 is a diagram illustrating an example of a correction factor table for performing correction according to a working period of an employee or the like. According to the correction factor table of Fig. 11, for example, in a case where the working period of a certain employee or the like is 2 years or more and less than 3 years, the correction factor for the points of the employee or the like is 80%, and if the standard is 100 points, the correction factor is corrected to 80 points.

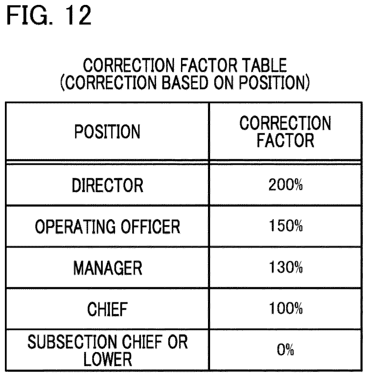

Fig. 12 is a diagram illustrating an example of a correction factor table for performing correction according to a position of an employee or the like. According to the correction factor table of Fig. 11, for example, in a case where a certain employee or the like is a director, the correction factor for points of the employee or the like is 150%, and if the standard is 100 points, the correction factor is corrected to 150 points.

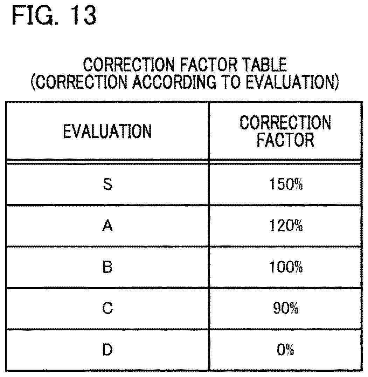

Fig. 13 is a diagram illustrating an example of a correction factor table for performing correction according to evaluation of an employee or the like. The evaluation is evaluation of work performance and the like. In the evaluation, S is the highest evaluation, A is the second highest evaluation, B is the third highest evaluation, C is the fourth highest evaluation, and D is the lowest evaluation. According to the correction factor table of Fig. 11, for example, in a case where an evaluation of a certain employee or the like is D, the correction factor for the point of the employee or the like is 0%, and if the standard is 100 points, the correction factor is corrected to 0 point.

The information processing device 16a may grant points to an employee or the like using each of the point granting reference tables of Figs. 8, 9, and 10 alone, may use a combination thereof, or may use a point granting reference table other than these. The information processing device 16a may correct the points for the employee or the like by using each of the correction factor tables of Figs. 11, 12, and 13 alone, may use a combination thereof, or may use a correction factor table other than these. The information processing device 16a may grant the point calculated in the point granting reference table illustrated in Figs. 8, 9, and 10 to the employee or the like. In addition, a point obtained by multiplying the number of points calculated in the point granting reference table by the correction factor in the correction factor table illustrated in Figs. 11, 12, and 13 may be granted to an employee or the like.

Returning to the description of Fig. 7, in step S702, the information processing device 16a registers a potential beneficiary. The information processing device 16a receives an input of a name, an address, and the like of the employee or the like of the potential beneficiary by the operator, and registers the data in the storage unit 103, for example, as potential beneficiary information. The information processing device 16a may perform an anti-social check as to whether or not the potential beneficiary belongs to an anti-social force by using the potential beneficiary information.

In step S703, the information processing device 16a performs point management of the potential beneficiary. Specifically, points are granted to the potential beneficiary registered in step S702 on the basis of the point granting reference table and the correction factor table generated in step S701. The points are granted by registering the number of granted points in the storage unit 103, for example, for each potential beneficiary. In addition, in step S703, in a case where a potential beneficiary loses the qualification to become a beneficiary due to retirement or the like, the information processing device 16a may execute processing of clearing the number of points granted to the potential beneficiary to 0. In addition, in step S703, the information processing device 16a may accept an input of personnel data related to personnel, for example, and execute processing of reducing the number of points granted to a potential beneficiary when there is a defect record such as poor performance or bad behavior with respect to the potential beneficiary in the personnel data.

In the present example, the information processing device 16a grants points to the potential beneficiaries as described above, and determines the number of stock options to be granted to each of the potential beneficiaries in accordance with the points granted to each of the potential beneficiaries, for example, when registering the potential beneficiaries in step S504 or the like. When the number of the stock options to be granted to each of the potential beneficiaries is determined, the information processing device 16a registers the determined number in the storage unit 103, for example. For example, the information processing device 16a may grant one stock option for every certain number of points. In addition, for example, the information processing device 16a may determine the number of stock options to be granted to the potential beneficiary such that a ratio of the number of points granted to the potential beneficiary to the total number of points granted to all the potential beneficiaries and a ratio of the number of stock options to be granted to the potential beneficiary to the total number of stock options become the same ratio.

After determining the number of stock options to be granted to each of the potential beneficiaries, the information processing device 16a recognizes the potential beneficiary to whom the stock option is to be granted as a beneficiary. The information processing device 16a may execute processing of creating a document of transfer of the stock option or a document related to tax for each beneficiary.

Furthermore, the information processing device 16a creates company regulations (hereinafter referred to as "delivery guidelines ") describing a viewpoint of objective management regarding point granting. Specifically, for example, the information processing device 16a receives an input of an answer (request item) from the trustor or the issuing company, describes the input, describes contents and management of the point granting reference table and the correction factor table, and further describes a point loss item and a deduction item, thereby automatically creating the delivery guideline. The information processing device 16a can automatically create the delivery guideline by accumulating data of the sentence example of the delivery guideline according to the index for measuring the contribution degree and the correction factor, combining the sentence examples according to the selected index and the correction factor, and inserting the automatically generated point granting table and correction factor table. That is, the information processing device 16a creates the delivery guideline on the basis of the point granting reference table and the correction factor table.

While the preferred examples of the present invention have been described above, the present invention is not limited to these examples, and various modifications and changes can be made within the scope of the gist of the present invention. These examples and modifications thereof are included in the scope and gist of the invention, and are also included in the invention described in the claims and the equivalent scope thereof.

This application claims priority based on Japanese Patent Application No. 2022-5561 filed on January 18, 2022, the entire contents of which are incorporated herein by reference.

### Reference Signs List

- 10: Issuing company
- 11: Trustor
- 12: First trustee
- 13: Beneficiary
- 14: Beneficiary designation right holder
- 15: Second trustee
- 18: Third trustee
- 19: Beneficiary
- 20: Stock market

## Claims

1. An information processing device comprising:
a first storage means that stores first trust information that is information related to a fact that a stock option is entrusted from a trustor to a first trustee;
an inquiry means that inquires whether to designate a beneficiary for all or some of the stock options before a certain period of time prior to occurrence of a beneficiary designation event of a trust indicated by the first trust information;
a response reception means that receives a response to an inquiry by the inquiry means;
a second storage means that stores second trust information that is information related to a fact that, in a case where the response received by the response reception means does not designate all the beneficiaries, the stock option for which no beneficiary is designated among the stock options related to the first trust information is entrusted from the trustor to the second trustee;
a generation means that generates a point granting reference table and a correction factor table indicating a reference for granting a point to a potential beneficiary;
a potential beneficiary registration means that registers the potential beneficiary;
a point management means that manages points of the potential beneficiaries on the basis of the point granting reference table and the correction factor table; and
a determination means that determines the number of stock options to be granted to the potential beneficiary according to the point of the potential beneficiary managed by the point management means in a case where the response received by the response reception means designates a beneficiary.

2. The information processing device according to claim 1, further comprising
a reading means that reads a book price of the stock option related to the first trust information included in the first trust information stored in the first storage means, wherein
the second storage means stores the book price of the stock option related to the second trust information included in the second trust information by taking over the book price read by the reading means.

3. The information processing device according to any one of claims 1 and 2, wherein
at the time of designation of the beneficiary, after designating a provisional person to be granted, the provisional person to be granted is confirmed as the beneficiary when a confirmation condition is satisfied.

4. The information processing device according to any one of claims 1 to 3, further comprising
a delivery guideline creating means that creates a delivery guideline on the basis of the point granting reference table and the correction factor table.

5. A control method of an information processing device, comprising:
a first storage step of storing first trust information that is information related to a fact that a stock option is entrusted from a trustor to a first trustee;
an inquiry step of inquiring whether to designate a beneficiary for all or some of the stock options before a certain period of time prior to occurrence of a beneficiary designation event of a trust indicated by the first trust information;
a response reception step of receiving a response to an inquiry by the inquiry means;
a second storage step of storing second trust information that is information related to a fact that, in a case where the response received by the response reception means does not designate all the beneficiaries, the stock option for which no beneficiary is designated among the stock options related to the first trust information is entrusted from the trustor to the second trustee;
a generation step of generating a point granting reference table and a correction factor table indicating a reference for granting a point to a potential beneficiary;
a potential beneficiary registration step of registering the potential beneficiary;
a point management step of managing points of the potential beneficiaries on the basis of the point granting reference table and the correction factor table; and
a determination step of determining the number of stock options to be granted to the potential beneficiary according to the point of the potential beneficiary managed by the point management means in a case where the response received by the response reception means designates a beneficiary.

6. A program causing a computer to function as each means included in the information processing device according to any one of claims 1 to 4.
